# EUROPEAN PATENT APPLICATION

(11) **EP 4 793 634 A1**
(43) Date of publication of application: **19.08.2026**
(21) Application number: 24926566.1
(22) Date of filing: 28.05.2024
(51) Int. Cl.: G01N 21/95, G01N 21/88, G01N 35/02, G01B 11/00, G06T 7/00

(54) **WELDING INSPECTION METHOD AND SYSTEM**

(30) Priority: 27.02.2024 CN 202410213396
(71) Applicant: Contemporary Amperex Technology Co., Limited, Ningde, Fujian 352100 (CN)
(72) Inventor: TU, Yinhang, Ningde, Fujian 352100 (CN); LIU, Yi, Ningde, Fujian 352100 (CN)
(74) Representative: Ran, Handong
(86) International application number: PCT/CN2024/095833
(87) International publication number: WO 2025/179695

(57) **Abstract**

A welding inspection method and system. The welding inspection method comprises: when a battery cell (505) on a turntable (404) reaches an inspection station (405), a controller (401) controls a lifting mechanism on the turntable (404) to execute a lifting operation to lift the battery cell (505) to a preset height, and sends an image acquisition signal to an image acquisition system (403); in response to the image acquisition signal, the image acquisition system (403) performs image acquisition on a welding area of the battery cell (505) located at the preset height to obtain an acquired image, and sends the acquired image to an industrial personal computer (402); the industrial personal computer (402) performs welding inspection on the acquired image to obtain a welding inspection result of the battery cell (505), wherein the welding inspection at least comprises inspecting a weld bead area of the battery cell (505) on the acquired image.

## Description

### CROSS-REFERENCE TO RELATED APPLICATIONS

The present disclosure is filed based on, and claims priority to, Chinese Patent Application No. 202410213396.1, filed on February 27, 2024 and entitled "WELDING INSPECTION METHOD AND SYSTEM", the entire content of which is hereby incorporated herein by reference.

### TECHNICAL FIELD

The present disclosure relates to the field of battery inspection, and in particular, to a welding inspection method and system.

### BACKGROUND

A new energy battery is finding expanding applications in both daily life and industrial sectors. Currently, a new energy vehicle equipped with a battery is extensively used. In addition, the battery is also increasingly used in the field of energy storage or the like.

In a power battery system, after a cylindrical bare battery cell is placed in a case, penetration welding needs to be performed for a positive electrode terminal and a positive electrode current collector plate to ensure that positive and negative electrodes of the bare battery cell are connected to a positive electrode terminal and a steel case. Synchronously, the penetration welding is performed for the negative electrode and a negative electrode current collector plate. After the welding, sizes and defects of a welding seam and a surface where the welding seam is located need to be inspected.

In the related art, after welding of battery cells of a battery ends, it is usually necessary to manually inspect and determine a defect of a welding bead. Therefore, problems occur, such as a high cost for manual inspection and missing inspection due to visual fatigue.

### SUMMARY

The main object of the present disclosure is to provide a welding inspection method and system that can improve accuracy and efficiency of welding bead inspection.

Technical solutions in the embodiments of the present disclosure are implemented as follows.

In a first aspect, an embodiment of the present disclosure provides a welding inspection method, including:
controlling, through a controller, a lifting mechanism on a turntable to perform a lifting operation to lift a battery cell to a preset height, and sending an image acquisition signal to an image acquisition system when the battery cell on the turntable reaches an inspection station;
performing, through the image acquisition system, image acquisition on a welding area of the battery cell located at the preset height in response to the image acquisition signal to obtain an acquired image, and sending the acquired image to an industrial personal computer; and
performing, through the industrial personal computer, welding inspection on the acquired image to obtain a welding inspection result for the battery cell; where the welding inspection at least comprises inspection of a welding bead area of the battery cell on the acquired image.

According to the foregoing technical means, instead of manual visual inspection, an automatic welding inspection system is used to perform abnormality inspection on welding information on a welding area of a battery cell, which can not only improve accuracy and efficiency of welding bead inspection, but also reduce a labor cost and a time cost. In addition, in the present disclosure, the turntable that can accommodate a plurality of batteries is controlled and rotated to achieve transferring of a battery cell from a loading station to an inspection station, so that the transferring of the battery cell is more intelligent, thereby improving efficiency of battery cell production. Further, a battery cell at a welding station is transported through the turntable, thereby ensuring consistency of battery cells to be fed. Finally, the battery cell is lifted to a preset height through the lifting mechanism, so that it can be ensured that each battery cell is in place in a consistent state, preventing a problem of inaccurate image position acquisition by an image acquisition system and occurrence of an image extraction problem caused by fluctuation of a depth of field of a camera in the image acquisition system.

In the foregoing solution, a plurality of support cups for placing a battery cell are provided on the turntable. The welding inspection method further includes: controlling, through the controller when the battery cell is placed in a support cup at a loading station, the turntable to rotate to drive the battery cell to move from the loading station to the inspection station; and sending, through the controller, the acquisition signal to the image acquisition system when the battery cell is moved to the inspection station.

According to the foregoing technical means, when a battery cell is placed in a support cup at a loading station, a controller drives the support cup to move to an inspection station, thereby sending an acquisition signal to a visual inspection system. In this way, the controller can more accurately determine when an acquisition signal to an image acquisition system is triggered to improve accuracy for obtaining an acquired image during subsequent acquisition. In addition, the turntable that can accommodate a plurality of batteries is controlled and rotated to achieve transferring of a battery cell from a loading station to an inspection station, so that the transferring of the battery cell is more intelligent, thereby improving efficiency and intellectualization of battery cell production. Further, a battery cell at a welding station is transported through the turntable, thereby ensuring consistency of battery cells to be fed.

In the foregoing solution, the performing, through the industrial personal computer, welding inspection on the acquired image to obtain a welding inspection result for the battery cell includes: performing, through the industrial personal computer, image segmentation on the acquired image to obtain a welding bead area and a non-welding bead area; and performing, through the industrial personal computer, at least one type of defect inspection on at least one of the welding bead area and the non-welding bead area through a trained inspection model to obtain at least one defect inspection result; where the trained model is obtained based on training via sample images with labeled defects; the defect inspection result at least comprises a welding slag inspection result, a burst point inspection result, a breakpoint inspection result, a welding bead offset result, and a size inspection result; and obtaining the welding inspection result for the battery cell based on the at least one defect inspection result.

According to the foregoing technical means, defect items such as a pinhole, a burst point, a welding line offset, a welding slag residue, a welding line size, welding disconnection, and pseudo welding for penetration welding are inspected through the image acquisition system and the industrial personal computer without manual inspection, which can not only improve accuracy and efficiency for welding bead inspection, but also reduce a labor cost and a time cost.

In the foregoing solution, the performing, through the industrial personal computer, at least one type of defect inspection on at least one of the welding bead area and the non-welding bead area through a trained inspection model to obtain at least one defect inspection result includes: performing, through the industrial personal computer, welding slag inspection on the non-welding bead area through the trained inspection model to obtain a welding slag inspection result; measuring, through the industrial personal computer, a size of welding slag to obtain a welding slag size when the welding slag result indicates that the welding slag exists in the non-welding bead area; and comparing the welding slag size with a preset welding slag size to obtain the welding slag inspection result.

According to the foregoing technical means, whether there is welding slag in a welding area is inspected, and further determination is made on identified welding slag based on a preset welding slag size, which can improve accuracy of identifying welding slag in a welding area of a battery cell.

In the foregoing solution, the performing, through the industrial personal computer, at least one type of defect inspection on at least one of the welding bead area and the non-welding bead area through a trained inspection model to obtain at least one defect inspection result includes: inspecting, through the industrial personal computer, brightness values of all pixels corresponding to the welding bead area through the trained inspection model to obtain a brightness value of each pixel; determining a quantity of burst-point areas in the welding bead area based on the brightness value of each pixel; where a value of a pixel in the burst-point area is greater than a preset value, and a brightness value of a pixel in the burst-point area is greater than preset brightness; and obtaining the burst point inspection result based on the quantity of the burst-point areas.

According to the foregoing technical means, a relatively small pinhole and a burst-point area on a welding bead are inspected, so that problems of missing inspection and erroneous inspection caused during visual inspection are prevented, thereby improving accuracy of inspecting a small defect on a welding bead.

In the foregoing solution, the performing, through the industrial personal computer, at least one type of defect inspection on at least one of the welding bead area and the non-welding bead area through a trained inspection model to obtain at least one defect inspection result includes: performing contour extraction, through the industrial personal computer, on the welding bead area through the trained inspection model to obtain a contour quantity of closed contours corresponding to the welding bead area; and obtaining the breakpoint inspection result based on the contour quantity.

According to the foregoing technical means, a breakpoint on a welding bead is inspected through a quantity of closed contours, so that problems of missing inspection and erroneous inspection caused during visual inspection are prevented, thereby improving accuracy for inspecting discontinuous defects for a welding bead.

In the foregoing solution, the performing, through the industrial personal computer, at least one type of defect inspection on at least one of the welding bead area and the non-welding bead area through a trained inspection model to obtain at least one defect inspection result includes: determining, through the industrial personal computer, a reference point of a battery cell on the acquired image through the trained inspection model and the acquired image; performing center point fitting on the welding bead area to obtain a welding bead center of the welding bead area, and determining an offset distance between the welding bead center and the reference point; and comparing the offset distance with a preset offset distance to obtain the welding bead offset result.

According to the foregoing technical means, a value of a distance between a welding bead and a reference point can be quickly determined, thereby improving accuracy and efficiency for offset inspection for a welding bead.

In the foregoing solution, the performing, through the industrial personal computer, at least one type of defect inspection on at least one of the welding bead area and the non-welding bead area through a trained inspection model to obtain at least one defect inspection result includes: performing, through the industrial personal computer, linear fitting on the welding bead area through the trained inspection model to obtain a straight welding bead corresponding to the welding bead area; performing first measurement on the straight welding bead to obtain a first measured size of the straight welding bead; performing segmentation processing on the straight welding bead along a length direction of the straight welding bead to obtain a plurality of segmented areas; performing second measurement on a plurality of non-adjacent target segmented areas in the plurality of segmented areas to obtain a plurality of second measured sizes; comparing the first measured size with a first preset size interval and comparing the plurality of second measured sizes with a second preset size interval to obtain the size inspection result.

According to the foregoing technical means, not only quickly whether there is a size abnormality in a welding bead area can be determined quickly, but also an amount of inspection by an industrial personal computer can be reduced, thereby improving inspection efficiency and rate.

In the foregoing solution, the obtaining the welding inspection result for the battery cell based on the at least one defect inspection result includes: obtaining a welding inspection result characterizing a normality of the battery cell when none of the welding slag inspection result, the burst point inspection result, the breakpoint inspection result, the welding bead offset result, and the size inspection result is abnormal; and obtaining a welding inspection result characterizing an abnormality of the battery cell when an inspection abnormality is present, where the inspection abnormality comprises at least one of: the welding slag inspection result characterizes the welding slag size greater than the preset welding slag size, the burst point inspection result characterizes the quantity of the burst-point areas is greater than a first preset quantity, the breakpoint inspection result characterizes the contour quantity greater than a second preset quantity, the welding bead offset result characterizes the offset distance greater than the preset offset distance, and the size inspection result characterizes the first measured size outside the first preset size interval and the plurality of second measured sizes outside the second preset size interval.

According to the foregoing technical means, defect items such as a pinhole, a burst point, a welding line offset, a welding slag residue, a welding line size, welding disconnection, and pseudo welding are inspected to determine whether welding of a battery cell is normal, so that a welding result is inspected in multiple dimensions and multiple aspects, thereby reducing risks of erroneous inspection and missing inspection and improving inspection accuracy.

In the foregoing solution, the welding inspection method further includes: sending, through the industrial personal computer, a mark signal to the controller when the welding inspection result characterizes an abnormality of the battery cell; and controlling, through the controller, a mark mechanism to mark a battery cell having an inspection abnormality based on the mark signal.

According to the foregoing technical means, when a welding inspection result is an inspection abnormality, an industrial personal computer sends a mark signal to a controller, so that the controller marks a battery cell in time. In this way, a relevant mark operation can be performed in time when an abnormality is inspected, so that it is facilitated to mark a defective product and send an alarm, thereby quickly preventing a phenomenon of output of the defective product and causing large-scale scrapping.

In the foregoing solution, the welding inspection method further includes: sending, through the industrial personal computer, an end signal including the welding inspection result to the controller; and controlling, through the controller, the turntable to rotate based on the end signal to drive the battery cell to move from the inspection station to a discharging station.

In a second aspect, an embodiment of the present disclosure provides a welding inspection system, including: a controller, configured to control a lifting mechanism on a turntable to perform a lifting operation to lift a battery cell to a preset height and send an image acquisition signal to an image acquisition system when the battery cell on the turntable reaches an inspection station; the image acquisition system, configured to perform image acquisition on a welding area of the battery cell located at the preset height in response to the image acquisition signal to obtain an acquired image, and send the acquired image to an industrial personal computer; and the industrial personal computer, configured to perform welding inspection on the acquired image to obtain a welding inspection result for the battery cell; where the welding inspection at least comprises inspection of a welding bead area of the battery cell on the acquired image.

According to the foregoing technical means, instead of manual visual inspection, an automatic welding inspection system is used to perform abnormality inspection on welding information on a welding area of a battery cell, which can not only improve accuracy and efficiency of welding bead inspection, but also reduce a labor cost and a time cost. In addition, in the present disclosure, the turntable that can accommodate a plurality of batteries is controlled and rotated to achieve transferring of a battery cell from a loading station to an inspection station, so that the transferring of the battery cell is more intelligent, thereby improving efficiency of battery cell production. Further, a battery cell at a welding station is transported through the turntable, thereby ensuring consistency of battery cells to be fed.

In the foregoing solution, the lifting mechanism includes at least a lifting driving member, a cam, a lifting transmission member, an upper top plate, and a limiting plate. The controller is further configured to send a lifting signal to the lifting driving member when the battery cell on the turntable reaches the inspection station. The cam is slidably connected to the turntable and connected to the lifting driving member. The cam is provided with a slope structure. The lifting transmission member has an end connected to the upper top plate and the other end located on the slope structure. The upper top plate is configured to support the battery cell. The limiting plate is arranged on the turntable and has the preset height. The lifting driving member has an end connected to the turntable and another end connected to the cam and is configured to drive the cam to slide on the turntable in response to the lifting signal, so as to drive the lifting transmission member to move in a first direction until the battery cell is in contact with the limiting plate.

According to the above technical means, it can be ensured that each battery cell is in place in a consistent state, preventing a problem of inaccurate image position acquisition by an image acquisition system and occurrence of an image extraction problem caused by fluctuation of a depth of field of a camera in the image acquisition system.

In the foregoing solution, the turntable further includes a plurality of turntable support cups. A root of an inner side of the turntable support cup is provided with an avoidance groove, and the turntable support cup is configured to place the battery cell.

According to the above technical means, a situation is prevented in which a battery cell is contaminated or the battery cell is stuck in the turntable support cup due to accumulation of dust and impurities at the root of the inner side of the support cup after the turntable support cup is used for a long time.

In the foregoing solution, the inspection station includes at least two image acquisition systems. The at least two image acquisition systems are configured to perform image acquisition on the welding area of the battery cell in response to the image acquisition signals to obtain the acquired images.

In the foregoing solution, the image acquisition system includes at least a light source, a camera, a locking structure, and a sliding rail structure. The camera is fixed on the inspection station through the locking structure and the sliding rail structure and is configured to perform image acquisition on the welding area of the battery cell to obtain the acquired image. The light source is fixed on the inspection station through the locking structure and the sliding rail structure and is located between the camera and the turntable to provide a light source for the camera. The sliding rail structure is configured to adjust positions of the camera and the light source on the inspection station.

According to the foregoing technical means, the image acquisition system can axially perform debugging of the camera and the light source through the locking structure and the sliding rail structure, so that the camera and the light source are compatible with battery cells of different lengths and sizes and can be applied to more use scenarios.

The above description is merely an overview of the technical solutions of the present disclosure. For a clearer understanding of the technical means of the present disclosure, the present disclosure can be carried out in accordance with the content of the description, and to make the above and other objectives, characteristics, and advantages of the present disclosure apparent and comprehensible, specific implementations of the present disclosure are described below.

### BRIEF DESCRIPTION OF THE DRAWINGS

The accompanying drawings herein are incorporated into the specification and constitute a part of the specification, and these accompanying drawings show embodiments consistent with the present disclosure and are used together with the specification to illustrate the technical solutions of the present disclosure. It is clear that the drawings described below show only some embodiments of the present disclosure, and those skilled in the art may further derive other drawings from the drawings without creative effort.

The flowcharts shown in the accompanying drawings are merely exemplary descriptions, do not need to include all content and operations/steps, and do not need to be performed in the described orders either. For example, some operations/steps may be further divided, while some operations/steps may be merged or partially merged. Therefore, an actual execution order may change according to an actual case.
FIG. 1 is a schematic flow chart I of an optional welding inspection method according to an embodiment of the present disclosure.
FIG. 2 is a schematic structural diagram of a turntable according to an embodiment of the present disclosure.
FIG. 3 is a schematic flow chart II of an optional welding inspection method according to an embodiment of the present disclosure.
FIG. 4 is a schematic structural diagram I of a welding inspection system according to an embodiment of the present disclosure.
FIG. 5 is a schematic structural diagram of a lifting mechanism according to an embodiment of the present disclosure.
FIG. 6 is a schematic structural diagram II of a welding inspection system according to an embodiment of the present disclosure.
FIG. 7 is a schematic flow chart of inspection according to an embodiment of the present disclosure.
FIG. 8 is a schematic diagram of a layout of an inspection station according to an embodiment of the present disclosure.
FIG. 9 is a schematic diagram of an inspection station according to an embodiment of the present disclosure.
FIG. 10 is a schematic flow chart of inspection communication according to an embodiment of the present disclosure.
FIG. 11 is a schematic diagram of a pinhole or a burst point on a welding bead according to an embodiment of the present disclosure.
FIG. 12 is a schematic diagram of a welding slag residue according to an embodiment of the present disclosure.
FIG. 13 is a schematic diagram of a welding bead offset according to an embodiment of the present disclosure.
FIG. 14 is a schematic diagram of a welding bead size according to an embodiment of the present disclosure.

### DETAILED DESCRIPTION OF PREFERRED EMBODIMENTS

To make the purpose, technical solution, and advantages of the embodiments of the present disclosure clearer, the specific technical solution of the present disclosure is further described in detail with reference to the accompanying drawings in the embodiments of the present disclosure. The following examples are used to describe the present disclosure, but are not used to limit the scope of the present disclosure.

Unless otherwise defined, all technical and scientific terms used in the present disclosure have the same meaning as commonly understood by those skilled in the art to which the present application belongs. Terms used in the present disclosure are merely intended to describe the embodiments of the present disclosure, and are not intended to limit the present disclosure.

In the following description, the involved expression "some embodiments", "this embodiment", "this embodiment", examples or the like describes subsets of all possible embodiments, but the expression "some embodiments" may be the same subset or different subsets of all the possible embodiments and, and may be combined with each other without conflict.

If similar description, such as "first/second", exists in an application document, the following description is added. In the following description, a term "first/second/third" involved is merely configured for distinguishing between similar objects and does not represent a specific order of objects. "First/second/third" may be transposed for a specific order or a sequence when allowed, so that this embodiment described herein can be implemented in an order other than those illustrated or described herein.

The term "and/or" in the embodiments of the present disclosure describes only an association relationship between associated objects and represents that three relationships may exist. For example, object A and/or object B may represent the following three cases: only object A exists, both object A and object B exist, and only object B exists.

Currently, a new energy battery is becoming more and more widely used in life and industry. The new energy battery is used not only in energy storage power systems such as hydropower, thermal power, wind power, and solar power plants, but also in electric tools such as electric bicycles, electric motorcycles, and electric vehicles, as well as aerospace, and many other fields. As an application field of power batteries continues to expand, a market demand for power batteries continues to increase. The battery involved in the embodiments of the present disclosure may be a battery cell. The battery cell refers to a basic unit that can realize mutual conversion between chemical energy and electrical energy, and can be used to manufacture a battery module or a battery pack, so as to supply power to an electrical device. A battery cell may be a secondary battery, and a secondary battery referring to a battery cell that may be continuously used by activating an active material by means of charging the battery cell after the battery cell is discharged. The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

The battery in the embodiments of the present disclosure may be a single physical module including one or a plurality of battery cells to provide a higher voltage and capacity. When there are a plurality of battery cells, the plurality of battery cells are connected in series, in parallel, or in series-parallel via a busbar component.

In the related art, welding of positive and negative electrodes of a battery is a very important step in an assembly process for the battery. Welding abnormality is likely to cause serious consequences such as a short circuit and an explosion of the battery. After a cylindrical lithium battery cell is placed in a case, to ensure that positive and negative electrodes of a bare battery cell and a positive electrode terminal and a steel case are connected, the positive electrode terminal is welded to the positive electrode current collector plate after a back cover of the cylindrical lithium battery cell is covered with the steel case. The back cover (corresponding to the negative electrode of the battery cell) is welded to a negative electrode current collector plate. A welding bead is left on a battery housing during welding of the battery. Due to a problem of unstable welding process, various defects occur on the welding bead, such as, a bead offset, and a pinhole, a pit, a burst point, and a projection on the welding bead.

Therefore, quality inspection needs to be performed on a welding bead of a ttery to ensure performance and safety of the battery. In the field of inspection of the welding bead of the battery, visual inspection is usually performed manually, which has problems of a high manual inspection cost and missing inspection due to visual fatigue.

Based on the above technical problems, the present disclosure considers that an inspection station may be provided on a battery production line. After welding of a battery is completed, the battery is driven to the inspection station by a turntable. A welding area of the battery is automatically inspected through the inspection station. Inspection efficiency is improved, and further, automatic inspection also can realize accuracy of inspection of various defect items after welding, reducing a labor cost and a time cost.

Based on the above inventive concept, an embodiment of the present disclosure provides a welding inspection method. The method is applied to a welding inspection system of a battery production line. The welding inspection system at least includes an industrial personal computer, a controller, and an image acquisition system on an inspection station. The controller may be any one of a programmable logic controller (PLC), a single-chip microcomputer, a middle computer, and a host computer. The image acquisition system may refer to a two-dimensional camera system provided on the inspection station. The industrial personal computer may be the host computer. The industrial personal computer may be installed with visual inspection software for performing welding inspection on an image of a battery acquired by the two-dimensional camera system.

In the welding inspection method provided by the embodiment of the present disclosure, when a battery cell on a turntable reaches an inspection station, a controller controls a lifting mechanism on the turntable to perform a lifting operation to lift the battery cell to a preset height, and sends an image acquisition signal to an image acquisition system. The image acquisition system performs image acquisition on a welding area of the battery cell located at the preset height in response to the image acquisition signal to obtain an acquired image, and sends the acquired image to an industrial personal computer. The industrial personal computer performs welding inspection on the acquired image to obtain a welding inspection result of the battery cell.

In this way, in the embodiments of the present disclosure, instead of manual visual inspection, an automatic welding inspection system is used to perform abnormality inspection on welding information on a welding area of a battery cell, which can not only improve accuracy and efficiency of welding bead inspection, but also reduce a labor cost and a time cost. In addition, in the present disclosure, the turntable that can accommodate a plurality of batteries is controlled and rotated to achieve transferring of a battery cell from a loading station to an inspection station, so that the transferring of the battery cell is more intelligent, thereby improving efficiency and battery cell production.

A battery inspected through the welding inspection method disclosed in the embodiments of the present disclosure may be, but is not limited to, used in an electric device such as a vehicle, a ship, or an aircraft. A power supply system of the electric device can be composed of the battery pack, the battery, and the like disclosed in the present disclosure. This facilitates alleviation of battery cell expansion force deterioration and automatic adjustment of a battery cell expansion force and supplement of an electrolyte due to consumption, thereby improving the battery performance stability and the battery life.

For an electric device using the battery inspected through the welding inspection method disclosed in the embodiments of the present disclosure as a power source, the electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

An embodiment of the present disclosure provides a welding inspection method to improve accuracy and efficiency of welding inspection for a battery. The technical solution disclosed in the present disclosure is described in detail below with reference to the accompanying drawings.

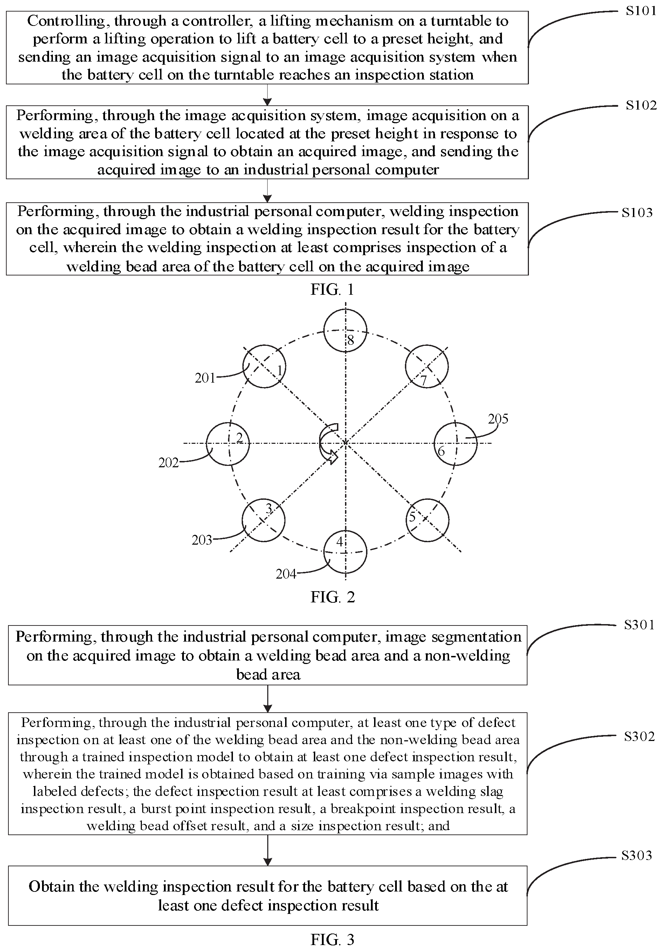

Referring to FIG. 1, FIG. 1 is a schematic flow chart I of an optional welding inspection method according to an embodiment of the present disclosure. The method is applied to a welding inspection system. The welding inspection system includes: a controller, an image acquisition system, and an industrial personal computer. The welding inspection method is implemented by steps S101 to S103:

In step S101, when a battery cell on a turntable reaches an inspection station, a controller controls a lifting mechanism on a turntable to perform a lifting operation to lift a battery cell to a preset height, and sends an image acquisition signal to an image acquisition system.

In the embodiment of the present disclosure, a controller (PLC) is a central hub of a system and is responsible for overall control and coordination. The controller communicates with an industrial personal computer to receive an inspection result of the industrial personal computer and/or controls an image acquisition system to perform a related instruction.

The image acquisition system may refer to a camera system on the inspection station, including asset assemblies such as a camera, a light source, and a display interface. The display interface may be used to display an acquired image captured by the camera, or may be used to receive an inspection result of an industrial personal computer and display the inspection result on the display interface after the industrial personal computer performs inspection. In some embodiments, the display interface may be a human machine interface (HMI), which is used for an engineer on site to adjust a parameter of an image acquisition system, for example a parameter such as sensitometry to adjust quality of an acquired image. Here, the camera may be a charge coupled device (CCD) camera, or may be a two-dimensional camera or a three-dimensional camera capable of image acquisition.

It should be noted that the inspection station may be a station for performing abnormality inspection on a welding area of a battery cell, a welding station is in front of the inspection station, and a welded battery cell reaches the inspection station through a conveyor belt and a turntable. Abnormality inspection on a welding area of a battery cell includes, but is not limited to, inspecting whether a welding bead of a battery cell is offset, whether a welding bead size is abnormal (including but not limited to, a length of a welding bead, a width of a welding bead, and a height of a welding bead), whether there is any welding slag in an area outside a welding bead (here, the area outside the welding bead may be an area adjacent to the welding bead within the welding area), whether there is a burst point, a projection, a pinhole, or the like in a welding bead.

In the embodiments of the present disclosure, a welding area of a battery cell may refer to an area where a welding bead is located on a battery housing after a battery cell of a battery is welded (a process of welding positive and negative electrodes for a battery, a welding process after a battery is wrapped by mylar, etc.). Here, the welding area of the battery cell includes, but is not limited to, a welding bead area on the battery cell, an area outside a welding bead area adjacent to the welding bead area, and the like. Here, the welding area of the battery cell may be located at any position of the battery cell, such as, a top cover area of the battery cell, a side surface of the battery cell, a bottom cover of the battery cell, and the like.

In the embodiments of the present disclosure, the battery cell may refer to a battery cell of any shape such as a square battery cell, a circular battery cell, etc. The battery cell generally refers to a battery cell, that is, one of the basic units constituting a battery. The battery cell is an inner core component of a battery and is responsible for storing and releasing electrical energy. The battery cell may be a lithium-ion battery cell (Li-ion Cell), a lithium polymer battery cell (Li-polymer Cell), a nickel-hydride battery cell (NiMH battery cell), or the like. The type of the battery cell is not limited in the embodiments of the present disclosure and may be specifically selected based on actual application scenarios.

In the embodiments of the present disclosure, the battery cell is an inner core component of the battery pack. One battery pack usually includes a plurality of battery cells. These battery cells are combined to provide required power capacity and voltage. The battery pack refers to a device composed of a plurality of battery cells, and is intended to store electrical energy and provide power supply. The components of the battery pack include at least: a battery cell, a battery management system (BMS), a housing, a connection wire harness, a connector, an interface, and the like. These assemblies work together to combine the battery cells into a fully functional battery pack for various application scenarios. For example, the battery pack may be applied to an electric vehicle, an energy storage system, a portable electronic apparatus, a solar system, a wind energy system, an emergency backup power supply, a power tool, an electric bicycle, or the like. This is not limited in the embodiments of the present disclosure and may be specifically selected based on actual application scenarios.

It should be noted that the battery pack may use different types of battery cells, such as lithium ion batteries, nickel hydrogen batteries, lithium polymer batteries, etc., which are specifically determined according to needs and performance requirements in actual applications.

In the embodiments of the present disclosure, an inspection station is provided with a turntable. Through the turntable, a battery cell welded at a welding station is transferred to an inspection station. When a battery cell on the turntable reaches the inspection station, a controller controls a lifting mechanism on the turntable to perform a lifting operation to lift the battery cell to a preset height, and sends an image acquisition signal to an image acquisition system to perform image acquisition.

Here, the controller inspects whether the battery cell has arrived at the inspection station by inspecting a position, signal, or other specific feature of the battery cell using a sensor or other inspection apparatus arranged at a fixed position. Once the controller confirms that the battery cell has reached the inspection station, the controller sends a lifting signal to the lifting mechanism to control the lifting mechanism to perform a lifting operation to lift the battery cell to a preset height, and controls the image acquisition system to acquire a welding area of the battery cell at the preset height.

It can be understood that, in the welding inspection method provided by the embodiments of the present disclosure, the lifting mechanism in the turntable ensures that a height is consistent during inspection of each battery cell. That is, a distance from an image acquisition system to a surface to be inspected of a battery cell is identical, thereby preventing a problem of an inaccurate inspection result caused by an image acquisition error due to fluctuation of a depth of field of a camera.

In step S102, the image acquisition system performs image acquisition on a welding area of the battery cell located at the preset height in response to the image acquisition signal to obtain an acquired image, and sends the acquired image to an industrial personal computer.

In some embodiments, the inspection station may include at least two image acquisition systems respectively performing image acquisition on two battery cells. To ensure accuracy of an image, a plurality of images may be acquired for one battery cell. An acquisition frequency corresponding to image acquisition on a battery cell may be determined based on actual needs, so that a quantity of acquired images may be one, two, or more.

In some embodiments, the image acquisition system controls the camera to move along an edge of a battery cell or the battery cell itself to move under the camera to obtain complete information of a welding area of the battery cell. In this way, image acquisition achieved while scanning is helpful to inspect surface abnormalities or other problems in the welding area.

In the embodiments of the present disclosure, the acquired image may include all information about surface features of the welding area of the battery cell, such as a shape, a size, a color, etc., so that, through subsequent image processing and analysis, whether there is a defect in the welding area may be inspected. For example, the acquired image may include the following content: a shape and size of a welding bead in a welding area: size information, such as an outer shape, a diameter, a length, and a width of a welding bead; quality of a surface of a welding bead, including flatness, homogeneity, and possible defects or damage, such as, a burst points, a pinhole, a protrusions or a pit, or the like; welding slag information outside a welding bead in a welding area: information such as a shape, a position, and a size of welding slag; and color information of an welding area, for example, a color of a surface of a welding area. In an actual application scenario, the acquired image may further include other display content, which is not limited in the embodiments of the present disclosure.

In some embodiments, after the image acquisition system acquires the acquired image, the acquired image is sent to an industrial personal computer. The industrial personal computer inspects the welding area of the battery cell based on the acquired image.

In step S103, the industrial personal computer performs welding inspection on the acquired image to obtain a welding inspection result for the battery cell. The welding inspection at least includes inspection of a welding bead area of the battery cell on the acquired image.

In the embodiments of the present disclosure, a battery cell on an acquired image at least includes a welding bead area and a non-welding bead area. The industrial personal computer performs abnormality inspection on the welding area on the acquired image, including but not limited to, whether a welding bead is offset and whether a welding bead size is abnormal (including but not limited to, a length of a welding bead, a width of a welding bead, and a height of a welding bead), whether there is any welding slag in an area outside a welding bead (here, the area outside the welding bead may be a non-welding bead area adjacent to the welding bead within the welding area), whether there is a burst point, a projection, a pinhole, or the like in a welding bead.

In the embodiments of the present disclosure, visual inspection software may be installed in the industrial personal computer, and after receiving the acquired image, the industrial personal computer inspects the welding area of the battery cell on the acquired image through the visual inspection software. Here, the visual inspection software may inspect the acquired image based on a trained model. The trained inspection model may be obtained through training via a sample image labeled with defects and supervised learning. The sample image may be an image labeled with information such as welding slag information, burst point information on a welding bead, breakpoint information on a welding bead, welding bead offset information, and welding bead size abnormality. Through the inspection model, the sample image is inspected to obtain a sample inspection result. The sample inspection result is compared with the labeled information of the sample image to determine a similarity between the sample inspection result and the labeled information. A loss of the inspection model is determined based on the similarity. Through the loss, parameters of the inspection model are corrected to obtain the trained model. For example, a weight value is adjusted, so that loss of welding slag information output by the trained model converges.

In some embodiments, after obtaining the welding inspection result of the battery cell, the industrial personal computer may send the welding inspection result to the controller. The controller continues to transport a battery cell to a discharging station based on the received welding inspection result and determines, at the discharging station, based on the welding inspection result, whether to transport the battery cell to an abnormality mark station or to a station corresponding to a next normal operation, for example, a battery cell grouping station.

In the embodiments of the present disclosure, the welding inspection result may be represented by text, such as, a welding bead size inspection is normal, a welding bead size inspection is abnormal, welding slag exists in a welding area of a battery cell, no welding slag exists in a welding area of a battery cell, a welding bead of a battery cell is offset, a welding bead of a battery cell is not offset, a welding bead of a battery cell has a welding abnormality, and the like. The welding inspection result may be displayed on a display interface of the industrial personal computer.

In the embodiments of the present disclosure, instead of manual visual inspection, an automatic welding inspection system is used to perform abnormality inspection on welding information on a welding area of a battery cell, which can not only improve accuracy and efficiency of welding bead inspection, but also reduce a labor cost and a time cost. In addition, in the present disclosure, the turntable that can accommodate a plurality of batteries is controlled and rotated to achieve transferring of a battery cell from a loading station to an inspection station, so that the transferring of the battery cell is more intelligent, thereby improving efficiency of battery cell production. Further, a battery cell at a welding station is transported through the turntable, thereby ensuring consistency of battery cells to be fed.

In some embodiments of the present disclosure, the turntable is provided with a plurality of support cups for accommodating battery cells. FIG. 2 is a schematic structural diagram of a turntable according to an embodiment of the present disclosure. As shown in FIG. 2, the turntable is provided with 8 first support cups, a first support cup 1 to an eighth support cup 8, for accommodating battery cells. In this case, a first support cup 1 and a second support cup 2 on a turntable may be located at a loading station. The loading station includes two loading ports, such as a first loading port 201 and a second loading port 202. A battery cell after welding is completed is transported to the first loading port 201 and the second loading port 202. Battery cells at the first loading port 201 and the second loading port 202 are placed in a first support cup 1 and a second support cup 2 by a robot. A third support cup 3 and a fourth support cup 4 are located at the inspection station. The inspection station includes at least two inspection ports, for example, a first inspection port 203 and a second inspection port 204. The image acquisition system is located at the first inspection port 203 and the second inspection port 204 to perform image acquisition on battery cells on the third support cup 3 and the fourth support cup 4. A sixth support cup 6 may be located at a discharging station. The discharging station may include at least one discharging port 205. When a support cup on a turntable rotates to the loading port 205, a grasping robot corresponding to the loading port 205 grasps and transports a battery cell on the sixth support cup 6 to a next station. A fifth support cup 5, a seventh support cup 7, and an eighth support cup 8 may be support cups located at other operation stations, for example, a station for processing an abnormal battery cell.

Here, when the turntable rotates to move battery cells on the first support cup 1 and the second support cup 2 to the first inspection port 203 and the second inspection port 204, the seventh support cup 7 and the eighth support cup 8 are located at the first loading port 201 and the second loading port 202. In this case, the first loading port 201 and the second loading port 202 can place battery cells in the seventh support cup 7 and the eighth support cup 8, and such circular transportation improves inspection efficiency.

Based on the turntable with a plurality of support cups shown in FIG. 2, the welding inspection method provided in the embodiments of the present disclosure may further include step S1 and step S2.

In step S1, when the battery cell is placed in a support cup at a loading station, the controller controls the turntable to rotate to drive the battery cell to move from the loading station to the inspection station.

In some embodiments, the loading station may be a station connected to a welding station. A battery cell after welding ends reaches a loading station through a conveyor belt. The battery cell may be placed in a support cup at the loading station by a robot having a gripper. The controller controls rotation of a turntable where the support cup is located, so as to drive the support cup to move to an inspection station. The loading station may be adjacent to or away from the inspection station. This is not limited in the embodiments of the present disclosure.

It should be noted that a plurality of support cups are arranged on a turntable and may be used to accommodate a plurality of battery cells. For the battery cells accommodated in the support cups, operations may be realized, such as liquid injection, welding, or welding inspection. In addition, the plurality of support cups arranged on the turntable are correspondingly shaped and sized to match battery cells or batteries. Here, a quantity of support cups on a turntable may be 8, 10, etc. Here, the quantity of the support cups may be determined according to actual production requirements. This is not limited in the embodiments of the present disclosure.

In step S2, the controller sends the acquisition signal to the image acquisition system when the battery cell is moved to the inspection station.

In the embodiments of the present disclosure, when a support cup with a battery cell is moved to an inspection station, a sensor on the inspection station inspects telecommunication in place and sends an in-place signal to a controller, so that the controller sends an acquisition signal to the image acquisition system.

Through the foregoing steps, when a cell is placed in a support cup at a loading station, a controller drives the support cup to move to an inspection station, thereby sending an acquisition signal to a visual inspection system. In this way, the controller can more accurately determine when an acquisition signal to an image acquisition system is triggered to improve accuracy for obtaining an acquired image during subsequent acquisition. In addition, the turntable that can accommodate a plurality of batteries is controlled and rotated to achieve transferring of a battery cell from a loading station to an inspection station, so that the transferring of the battery cell is more intelligent, thereby improving efficiency and intellectualization of battery cell production. Further, a battery cell at a welding station is transported through the turntable, thereby ensuring consistency of battery cells to be fed.

In the embodiments of the present disclosure, the industrial personal computer may perform welding inspection on an acquired image through a trained inspection model to obtain a welding inspection result of a battery cell. An inspection model may be obtained through training via a sample image labeled with defects and supervised learning. The sample image may be an image labeled with information such as welding slag information, burst point information on a welding bead, breakpoint information on a welding bead, welding bead offset information, and welding bead size abnormality. Through the inspection model, the sample image is inspected to obtain a sample inspection result. The sample inspection result is compared with the labeled information of the sample image to determine a similarity between the sample inspection result and the labeled information. A loss of the inspection model is determined based on the similarity. Through the loss, parameters of the inspection model are corrected to obtain the trained model. For example, a weight value is adjusted, so that loss of welding slag information output by the trained model converges.

In some embodiments, FIG. 3 is a schematic flow chart II of an optional welding inspection method according to an embodiment of the present disclosure. As shown in FIG. 3, step S103 may be implemented through step S301 to step S303.

In step S301, the industrial personal computer performs image segmentation on the acquired image to obtain a welding bead area and a non-welding bead area.

In the embodiments of the present disclosure, image segmentation is a natural step from coarse to fine reasoning. A segmentation target thereof is to label each pixel in an image with content represented by a corresponding type. That is, image segmentation is to classify each pixel in an image into one of types.

Here, after an image is segmented, a welding bead area and a non-welding bead area are obtained, where the welding bead area is adjacent to the non-welding bead area, the welding bead area refers to a welding area on a battery cell, and the non-welding bead area refers to an area on the battery cell that is not subjected to welding.

Here, an industrial personal computer segments a welding area and a non-welding area of an acquired image, so that a range of subsequent defect inspection is more accurately located to an area, thereby obtaining a more accurate fine inspection result.

In step S302, the industrial personal computer performs at least one type of defect inspection on at least one of the welding bead area and the non-welding bead area through a trained inspection model to obtain at least one defect inspection result; where the trained model is obtained based on training via sample images with labeled defects; the defect inspection result at least comprises a welding slag inspection result, a burst point inspection result, a breakpoint inspection result, a welding bead offset result, and a size inspection result.

In some embodiments, the industrial personal computer may inspect whether a welding bead area is shifted, inspect whether a welding bead size of a battery cell is abnormal (including but not limited to: whether a length of a welding bead is abnormal, whether a width of a welding bead is abnormal, and whether a height of a welding bead is abnormal), and inspects whether a defect is present for a welding bead of a battery cell, such as a burst point, a projection, or a pinhole; and inspects whether welding slag is present in a non-welding bead area. Therefore, the defect inspection result at least includes a welding slag inspection result, a burst point inspection result, a breakpoint inspection result, a welding bead offset result, and a size inspection result.

The industrial personal computer may synchronously inspect the welding bead area and the non-welding bead area, or may asynchronously inspect the welding bead area and the non-welding bead area, which is not limited in the embodiments of the present disclosure.

In step S303, the welding inspection result for the battery cell is obtained based on the at least one defect inspection result.

In some embodiments, when none of the welding slag inspection result, the burst point inspection result, the breakpoint inspection result, the welding bead offset result, and the size inspection result is abnormal, the welding inspection result of the battery cell is normal.

In some embodiments, when at least one of the welding slag inspection result, the burst point inspection result, the breakpoint inspection result, the welding bead offset result, and the size inspection result is abnormal, the welding inspection result of the battery cell is abnormal.

In the embodiments of the present disclosure, defect items such as a pinhole, a burst point, a welding line offset, a welding slag residue, a welding line size, welding disconnection, and pseudo welding for penetration welding are inspected through the image acquisition system and the industrial personal computer without manual inspection, which can not only improve accuracy and efficiency for welding bead inspection, but also reduce a labor cost and a time cost.

In some embodiments, welding slag has an important influence on welding quality. For example, welding slag reduces a mechanical property of a welding seam. Due to the presence of the welding slag, a strength of a welding seam is affected, thereby affecting strength and stability of an entire welded structure. Welding slag degrades sealing performance of a welded joint. The welding slag increases a size of a gap in the welded joint, thereby affecting sealing performance of the welded joint and bringing potential safety hazards to a welded structure. Therefore, corresponding measures need to be taken to reduce generation of welding slag and identify welding slag information to ensure stability and reliability of welding quality. Therefore, defect inspection may be welding slag inspection for a non-welding bead area. That is, step S302 may be implemented through step S10 to step S12:

In step S10, the industrial personal computer performs welding slag inspection on the non-welding bead area through the trained inspection model to obtain a welding slag inspection result.

In some embodiments, the industrial personal computer may perform image processing on a non-welding bead area through a trained inspection model to obtain a grayscale image corresponding to the non-welding bead area, and determine pixels with pixel grayscale values less than a preset value (for example, 50) on the grayscale image, that is, black pixels, as welding slag, to obtain a welding slag inspection result that the non-welding bead area has welding slag. However, the identified welding slag is not necessarily the welding slag that affects a welding inspection result of a battery cell. If the identified welding slag has a relatively small size and is insufficient to affect welding quality of a battery cell, it may also indicate that welding slag is not present in an area outside a welding bead in a welding area of the battery cell.

In some embodiments, if grayscale values of all pixels on the grayscale image are less than 200, the welding slag inspection result that the non-welding bead area does not have welding slag is obtained.

Therefore, after determining the welding slag according to the grayscale image, the industrial personal computer further needs to determine whether a size of the welding slag affects welding quality.

In step S11, the industrial personal computer measures a size of the welding slag to obtain a welding slag size when the welding slag result indicates that the welding slag exists in the non-welding bead area.

In some embodiments, when welding slag is present in a non-welding bead area, the industrial personal computer determines a size of each piece of welding slag. The size may be measured by a quantity of pixels here, or may be measured based on a length of welding slag in a certain direction.

In step S12, the welding slag size is compared with a preset welding slag size to obtain the welding slag inspection result.

In some embodiments, if determination is made through a quantity, a preset welding slag size may be a quantity of pixels corresponding to the welding slag that affects welding quality. For example, the preset welding slag size is 200 pixels, and when the quantity of pixels of any piece of welding slag is greater than 200, a welding slag inspection result that a non-welding bead area has welding slag is obtained.

In some embodiments, if determination is made through a length of welding slag in a certain direction, the preset welding slag size may be a longest size corresponding to the welding slag that affects welding quality. For example, with 1 millimeter (mm), when a length of any piece of welding slag in a direction is greater than 1 mm, a welding slag inspection result that a non-welding bead area has welding slag is obtained.

In the embodiments of the present disclosure, whether there is welding slag in a welding area is inspected, and further determination is made on identified welding slag based on a preset welding slag size, which can improve accuracy of identifying welding slag in a welding area of a battery cell.

In some embodiments, when welding is performed in a welding bead area, abnormal conditions such as a pinhole and a burst point may occur on a welding bead after welding, possibly because the welding bead is broken through welding due to a welding process. Therefore, defect inspection may also be burst point inspection for a welding bead area. Therefore, step S302 may also be implemented through steps S13 to S15.

In step S13, the industrial personal computer inspects brightness values of all pixels corresponding to the welding bead area through the trained inspection model to obtain a brightness value of each pixel.

In some embodiments, a pinhole and a burst point on a welding bead may appear as a bright point in a grayscale image. Therefore, brightness of each pixel point is inspected in the grayscale image to obtain the brightness value of each pixel point to determine a burst-point area. Then, whether a burst point is present in a welding bead area is determined based on a size of the burst-point area.

In step S14, a quantity of burst-point areas in the welding bead area is determined based on the brightness value of each pixel. A value of a pixel in the burst-point area is greater than a preset value, and a brightness value of a pixel in the burst-point area is greater than the preset brightness.

In some embodiments, based on the brightness value of each pixel, a bright spot area is determined as a burst-point area when it is determined whether brightness values of all pixels in the area are greater than the preset brightness (for example, 200) and a quantity of pixel values is greater than the preset value (for example, 100).

In step S15, the burst point inspection result is obtained based on the quantity of the burst-point areas.

In some embodiments, if the quantity of the burst-point areas is greater than or equal to 1, it is obtained that the welding bead area has the burst-point area. If the quantity of the burst-point areas is equal to 0, it indicates that the burst-point area is not present in the welding bead area. That is, the welding bead area does not have defects such as a pinhole or a burst point.

In the embodiments of the present disclosure, a relatively small pinhole and burst-point area on a welding bead is inspected, so that problems of missing inspection and erroneous inspection caused during visual inspection are prevented, thereby improving accuracy for inspecting small defects on a welding bead.

In some embodiments, when penetration welding is performed, situations such as broken points, welding disconnection, and pseudo welding may occur in a welding seam due to solder replacement or other reasons. That is, the welding seam is discontinuous, which may also cause a problem of low welding quality. Therefore, defect inspection may also be broken point inspection for the welding bead area. Therefore, step S302 may also be implemented through steps S16 and S17.

In step S16, the industrial personal computer performs contour extraction on the welding bead area through the trained inspection model to obtain a contour quantity of closed contours corresponding to the welding bead area.

In some embodiments, the industrial personal computer performs contour extraction on the welding bead area based on the trained inspection model to obtain a closed contour of the welding bead area. Here, if a condition such as a breakpoint is present, there are at least two closed contours.

In step S17, the breakpoint inspection result is obtained based on the contour quantity.

Here, based on a contour quantity of a closed contour, it may be determined whether a breakpoint is present in a welding bead area. For example, if only one closed contour is identified in the welding bead area, it indicates that the welding bead is continuous with no breakpoint. If only a plurality of closed contours are identified in the welding bead area, it indicates that the welding bead is discontinuous and has break points. A quantity of the break points is the quantity of closed contours minus one.

In the embodiments of the present disclosure, a breakpoint on a welding bead is inspected through a quantity of closed contours, so that problems of missing inspection and erroneous inspection caused during visual inspection are prevented, thereby improving accuracy for inspecting discontinuous defects for a welding bead.

In some embodiments, when a battery cell is a cylindrical battery cell, a welding bead is generally a circular welding bead. If a situation such as solder deformation occurs during welding, a welding bead offset may be caused. Therefore, defect inspection may also be offset inspection for a welding bead area. Therefore, step S302 may also be implemented through steps S18 to S20:

In step S18, the industrial personal computer determines a reference point of a battery cell on the acquired image through the trained inspection model and the acquired image.

In some embodiments, the reference point of the battery cell may refer to a reference point for determining whether a welding bead is offset, for example, the reference point is a center of a welding bead when the welding bead is not offset. Here, a positive electrode of a battery cell has a liquid injection hole located at the center of a top cover of a positive electrode of a battery cell. When a welding area of a battery cell is a welding area of a positive electrode of the battery cell, a reference point may refer to a liquid injection hole of the battery cell. A liquid injection hole is not present in a negative electrode of a battery cell. Therefore, when a welding area of a battery cell is a welding area of a negative electrode of a battery cell, it is necessary to fit a center of the negative electrode according to a negative electrode on an acquired image and center of the negative electrode is used as a reference point of the negative electrode to determine whether a welding bead is offset.

In step S19, center point fitting is performed on the welding bead area to obtain a welding bead center of the welding bead area, and an offset distance between the welding bead center and the reference point is determined.

In some embodiments, after the reference point is determined, a center point of a welding bead area is fitted to obtain a welding bead center of the welding bead area. An offset distance between the welding bead center and the reference point is calculated based on the welding bead center and the reference point. An offset distance may refer to a linear distance between the center of the welding bead and the reference point.

In step S20, the offset distance is compared with a preset offset distance to obtain the welding bead offset result.

In some embodiments, the preset offset distance is used to characterize an offset error. For example, 1 mm, namely, the linear distance between the center of the welding bead and the reference point is less than 1 mm, which indicates that the welding bead area is not offset. By comparing the offset distance with the preset offset distance, a welding offset result of whether the welding bead area is offset can be obtained.

In some embodiments, a welding bead area may be of a circular ring. Alternatively, determination whether a welding bead area is offset may also be performed by setting a circular ring area in a preset area of a battery cell, where if a welding bead does not exceed the circular ring area, it indicates that the welding bead is not offset, and if the welding bead exceeds the circular ring area, it indicates that the welding bead is offset. Here, if the welding bead is of another shape, whether the welding bead is offset may also be determined through this method.

According to the embodiments of the present disclosure, a value of a distance between a welding bead and a reference point can be quickly determined, thereby improving accuracy and efficiency for offset inspection for a welding bead.

In some embodiments, due to a temperature during welding and other reasons, a length and a width of a welding bead may not meet the demand. Therefore, defect inspection may also be size inspection for a welding bead area. Therefore, step S302 may also be implemented through steps S21 to S25:

In step S21, the industrial personal computer performs linear fitting on the welding bead area through the trained inspection model to obtain a straight welding bead corresponding to the welding bead area.

In the embodiments of the present disclosure, the industrial personal computer may perform linear fitting on a welding bead area through a trained inspection model and perform geometric transformation on a circular welding bead to obtain a straight welding bead corresponding to the welding bead area.

In step S22, first measurement is performed on the straight welding bead to obtain a first measured size of the straight welding bead.

Here, the first measurement means measurement of a length of a welding bead area. A first measured size means a length of a welding bead area.

In step S23, segmentation processing is performed on the straight welding bead along a length direction of the straight welding bead to obtain a plurality of segmented areas.

In some embodiments, if a width of each point of a straight welding bead is measured along a length direction of a straight welding bead, it takes a lot of time. Therefore, in the embodiments of the present disclosure, to reduce a calculation amount of an industrial personal computer, a straight welding bead may be segmented along a length direction of the straight welding bead to obtain a plurality of segmented areas. Lengths of segmented areas in a longitudinal direction may be the same or different.

In step S24, second measurement is performed on a plurality of non-adjacent target segmented areas in the plurality of segmented areas to obtain a plurality of second measured sizes.

In the embodiments of the present disclosure, the widths of the plurality of segmented areas may be inspected at intervals to reduce an inspection amount of the industrial personal computer and improve inspection efficiency.

Here, quantities of segmented areas of a plurality of target segmented areas may be the same or different. For example, a first one of a plurality of segmented areas is used as a first target segmented area, a fifth segmented area is used as a second target segmented area after 3 segmented areas, an eleventh segmented area is used as a third target segmented area after 5 segmented areas, and second measured sizes respectively corresponding to a plurality of target segmented areas are finally obtained. The second measured size is the width of each target segmented area.

In step S25, the first measured size is compared with a first preset size interval and the plurality of second measured sizes are compared with a second preset size interval to obtain the size inspection result.

In some embodiments, a first preset size interval is used to represent a length interval of a welding bead. A welding bead having a length within the interval is normal. The second preset size interval is used to characterized a width interval of a welding bead. Each target segmented area having a width within the interval is normal. When both the first measured size and the second measured size are normal, a size inspection result that a size of a welding bead area is normal is obtained.

In the embodiments of the present disclosure, not only quickly whether there is a size abnormality in a welding bead area can be determined quickly, but also an amount of inspection by an industrial personal computer can be reduced, thereby improving inspection efficiency and rate.

Based on the foregoing embodiment, step S303 may be implemented through step S3031 and step S3032.

In step S3031, a welding inspection result characterizing a normality of the battery cell is obtained when none of the welding slag inspection result, the burst point inspection result, the breakpoint inspection result, the welding bead offset result, and the size inspection result is abnormal.

In the embodiments of the present disclosure, if a welding slag inspection result satisfies that a welding slag size is less than a preset welding slag size, a burst point inspection result characterizes that a quantity of burst-point areas is less than a first preset quantity (for example, 1), a breakpoint inspection result characterizes that a contour quantity is less than or equal to a second preset quantity (for example, 1), a welding bead offset result characterizes that an offset distance is greater than a preset offset distance, and a size inspection result characterizes that a first measured size is within a first preset size interval and a plurality of second measured sizes are within a second preset size interval, a welding inspection result characterizing that a battery cell is normal is obtained.

In step S3032, a welding inspection result characterizing an abnormality of the battery cell when an inspection abnormality is present, where the inspection abnormality includes at least one of: the welding slag inspection result characterizes the welding slag size greater than the preset welding slag size, the burst point inspection result characterizes the quantity of the burst-point areas is greater than a first preset quantity, the breakpoint inspection result characterizes the contour quantity greater than a second preset quantity, the welding bead offset result characterizes the offset distance greater than the preset offset distance, and the size inspection result characterizes the first measured size outside the first preset size interval and the plurality of second measured sizes outside the second preset size interval.

In the embodiments of the present disclosure, if at least one of the welding slag inspection result, the burst point inspection result, the breakpoint inspection result, the welding bead offset result, and the size inspection result is abnormal, it indicates that welding of the battery cell is abnormal.

In the embodiments of the present disclosure, defect items such as a pinhole, a burst point, a welding line offset, a welding slag residue, a welding line size, welding disconnection, and pseudo welding are inspected to determine whether welding of a battery cell is normal, so that a welding result is inspected in multiple dimensions and multiple aspects, thereby reducing risks of erroneous inspection and missing inspection and improving inspection accuracy.

In some embodiments, if a welding inspection result is normal, a battery cell is normally discharged. If the welding inspection result is abnormal, the battery cell needs to be marked as being abnormal. Therefore, the welding inspection method provided in the embodiments of the present disclosure may further include step S40 to step S41.

In step S40, the industrial personal computer sends a mark signal to the controller when the welding inspection result characterizes an abnormality of the battery cell.

In some embodiments, the industrial personal computer may send a mark signal carrying abnormality information to the controller when the welding inspection result is an inspection abnormality.

In the embodiments of the present disclosure, the inspection abnormality includes, but is not limited to, the plurality of cases of the inspection abnormalities mentioned above, such as, welding slag exists in a welding area of a battery cell, a welding bead of a battery cell is offset, a size of a welding bead of a battery cell is abnormal, and a welding bead of a battery cell has a welding abnormality.

In step S41, the controller controls a mark mechanism to mark a battery cell having an inspection abnormality based on the mark signal.

In the embodiment of the present disclosure, the controller may control a mark mechanism arranged on an inspection station based on a received mark signal, such as a mark structure provided with a marker pen for marking an abnormality of a battery cell, or control a mark mechanism to attach an abnormality label to the battery cell.

In the embodiment of the present disclosure, when a welding inspection result is an inspection abnormality, an industrial personal computer sends a mark signal to a controller, so that the controller marks a battery cell in time. In this way, a relevant mark operation can be performed in time when an abnormality is inspected, so that it is facilitated to mark a defective product and send an alarm, thereby quickly preventing a phenomenon of output of the defective product and causing large-scale scrapping.

To implement the welding inspection method provided in the embodiments of the present disclosure, the embodiments of the present disclosure further provide a welding inspection system.

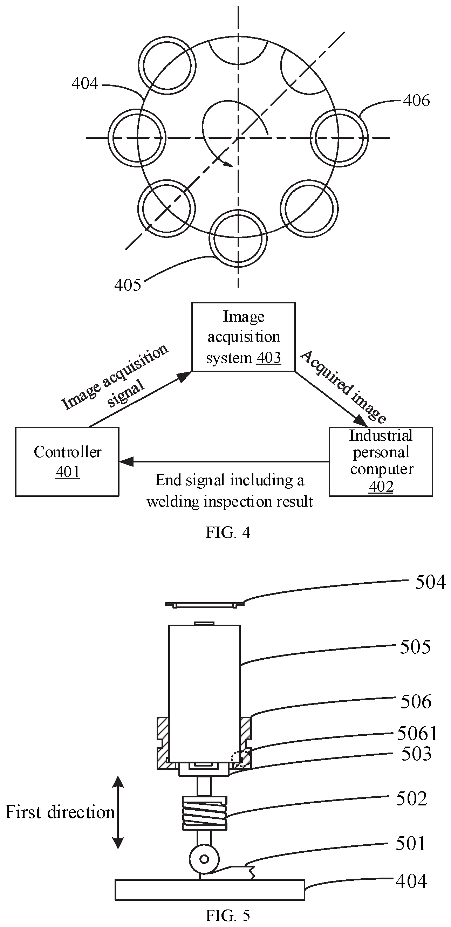

FIG. 4 is a schematic structural diagram I of a welding inspection system according to an embodiment of the present disclosure. As shown in FIG. 4, the welding inspection system includes: A controller 401, an industrial personal computer 402, and an image acquisition system 403.

The controller 401 is configured to control a lifting mechanism on a turntable 404 to perform a lifting operation to lift a battery cell to a preset height and send an image acquisition signal to an image acquisition system 403 when the battery cell on the turntable 404 reaches an inspection station 405 (such as the position of the battery cell in FIG. 4). The image acquisition system 403 is configured to perform image acquisition on a welding area of the battery cell located at the preset height in response to the image acquisition signal to obtain an acquired image, and send the acquired image to the industrial personal computer 402. The industrial personal computer 402 is configured to perform welding inspection on the acquired image to obtain a welding inspection result of the battery cell.

In some embodiments, the industrial personal computer 402 is further configured to send an end signal including the welding inspection result to the controller 401. The controller 401 controls the turntable 404 to rotate based on the end signal to drive the battery cell to move from the inspection station 405 to a discharging station 406.

In some embodiments, FIG. 5 is a schematic structural diagram of a lifting mechanism according to an embodiment of the present disclosure. As shown in FIG. 5, the lifting mechanism at least includes a lifting driving member (not shown in FIG. 5), a cam 501, a lifting transmission member 502, an upper top plate 503, and a limiting plate 504.

In some embodiments, the controller 401 is further configured to send a lifting signal to the lifting driving member when the battery cell 505 on the turntable 404 reaches the inspection station. A cam 501 is slidably connected to the turntable and connected to the lifting driving member, where the cam 501 is provided with a slope structure. The lifting transmission member 502 has an end connected to the upper top plate 503 and the other end located on the slope structure of the cam 501. The upper top plate 503 is configured to support the battery cell 505. The limiting plate 504 is arranged on the turntable 404 and has a preset height. The lifting driving member has an end connected to the turntable 404 and another end connected to the cam 501, and is configured to drive the cam 501 to slide on the turntable 404 in response to the lifting signal, so as to drive the lifting transmission member 502 to move in a first direction until the battery cell 505 is in contact with the limiting plate 504.

Still referring to FIG. 5, the turntable 404 further includes a plurality of turntable support cups 506. A root of an inner side of the turntable support cup 506 is provided with an avoidance groove 5061 (as shown by a dashed box in FIG. 5). The turntable support cup 506 is configured to place the battery cell 505. Here, the avoidance groove is provided to avoid a situation in which the battery cell 505 is contaminated or the battery cell 505 is stuck in the turntable support cup 506 due to accumulation of dust and impurities at the root of the inner side of the turntable support cup 506 after the turntable support cup 506 is used for a long time.

In some embodiments, each battery cell 505 is raised through the lifting transmission member 502. The battery cell 505 is driven through the cam 501 to raise the battery cell until the battery cell 505 is closely attached to the limiting plate 504. The battery cell 505 does not need to be detached from the turntable support cup 506. The turntable support cup 506 may ensure that each battery cell 505 to be tested is in place in a consistent state, thereby preventing a problem of inaccurate image position acquisition by an image acquisition system and occurrence of an image extraction problem caused by fluctuation of a depth of field of a camera in the image acquisition system.

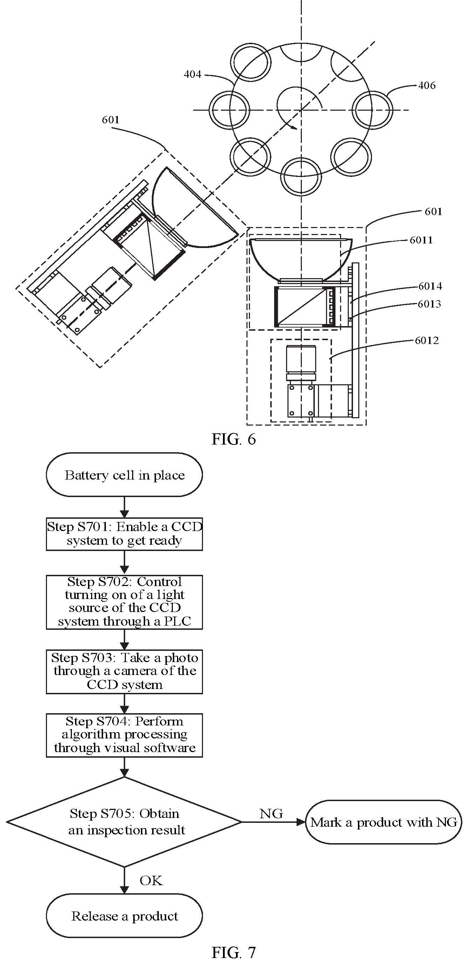

In some embodiments, FIG. 6 is a schematic structural diagram II of a welding inspection system provided by an embodiment of the present disclosure. As shown in FIG. 6, the inspection station in the welding inspection system includes at least two image acquisition systems 601. The at least two image acquisition systems 601 are configured to perform image acquisition on a welding area of a battery cell in response to the image acquisition signal to obtain an acquired image.

In some embodiments, the image acquisition system 601 at least includes a light source 6011, a camera 6012, a locking structure 6013, and a sliding rail structure 6014.

The camera 6012 is fixed on the inspection station through a locking structure 6013 and a sliding rail structure 6014 and is configured to perform image acquisition on a welding area of a battery cell to obtain an acquired image. The light source 6011 is fixed on the inspection station through the locking structure 6013 and the sliding rail structure 6014, located between the camera 6012 and the turntable, and configured to provide a light source for the camera 6012. The sliding rail structure 6014 is configured to adjust positions of the camera 6012 and the light source 6011 on the inspection station.

In some embodiments, the light source 6011 may include a dome light source and a coaxial light source that are axially arranged to implement better lighting, so that the acquired image is clearer.

In the embodiments of the present disclosure, the image acquisition system can axially perform debugging of the camera and the light source through the locking structure and the sliding rail structure, so that it is compatible with battery cells of different lengths and sizes and can be applied to more use scenarios.

In the embodiments of the present disclosure, to prevent the light source from causing damage to human eyes and prevent the camera from being contaminated, a protective cover may be provided outside the camera.

Next, an application of the welding inspection method in an actual scenario is provided.

To solve a problem of unstable image acquisition of a camera in the related art and a problem that manual inspection is required for welding quality due to a problem that consistency of incoming battery cells can not be guaranteed during a battery cell inspection process,
the embodiments of the present disclosure perform welding tests through multi-group battery cells simultaneously in place at a single station and a camera controlled by module motion to take photos. A pair of limiting plates (namely, an upper top plate and a limiting plate) are added for each battery cell at an inspection station. The battery cell is raised to a limiting reference plate (namely, the limiting plate) through a cam and an elastic raising mechanism (namely, a lifting transmission member), to ensure that an inspection height (namely, a distance from a camera to a surface to be inspected) of each battery cell is consistent, and prevent a problem of an image extraction error (NG, NO GOOD) caused by fluctuation of a depth of field of a camera. Apparatus efficiency is improved through the support cup in cooperation with the turntable. The root of the inner side of the support cup is provided with an avoidance groove, so that a situation is prevented in which a battery cell is contaminated or the battery cell is stuck in the support cup due to accumulation of dust and impurities at the root of the inner side of the support cup after the support cup is used for a long time. Through a 2D line-scan camera (namely, a camera) in cooperation with a coaxial light source and a dome light source, inspection of defect items such as a penetration welding pinhole, a burst point, a welding line offset, a welding slag residue, a welding line size, welding disconnection, and pseudo welding is realized. Size inspection and defect inspection logic after penetration welding is provided. A master apparatus PLC communicates with vision software on an industrial personal computer through a network. The master apparatus informs a CCD system (namely, an image acquisition system) of a current two-dimensional code information of a battery cell and informs a CCD system of arrival of the battery cell. The PLC provides a light source trigger signal to each camera. The camera takes photos in 2D mode. Using a processing algorithm, a feature of an inspection area may be displayed more intuitively. Inspection data may be acquired in real time. Vision software is connected with a camera, so that inspection efficiency and an inspection rate may be improved. Defect determination is performed through a deep learning algorithm which performs the defect inspection determination based on a located area of interest (ROI). Finally, a display result is displayed on an interface of a CCD system.

The embodiments of the present disclosure can solve a problem of low inspection accuracy and inspection efficiency with fewer vision systems. A battery cell is raised to a limiting reference plate through a cam and an elastic raising mechanism, to ensure that an inspection height (namely, a distance from a CCD to a surface to be inspected) of each battery cell is consistent, and prevent an NG problem of image extraction caused by fluctuation of a depth of field of a camera. The root of the inner side of the support cup is provided with an avoidance groove, so that a situation is prevented in which a battery cell is contaminated or the battery cell is stuck in the support cup due to accumulation of dust and impurities at the root of the inner side of the support cup after the support cup is used for a long time. Inspection of defect items such as a penetration welding pinhole, a burst point, a welding line offset, a welding slag residue, a welding line size, welding disconnection, and pseudo welding can be realized.

FIG. 7 is a schematic flow chart of inspection according to an embodiment of the present disclosure. As shown in FIG. 7, a flow chart of inspection of penetration welding for a battery cell may be implemented through steps S701 to S705.

In step S701, a CCD system is ready.

In the embodiments of the present disclosure, after welding is completed in a penetration welding apparatus (for example, a penetration welding machine for positive electrodes or a penetration welding machine for negative electrodes) for a cylindrical battery cell, a battery cell flows to a visual inspection station along with clamps. After the battery cell flows to an inspection start position, the CCD system is ready.

In step S702, the PLC controls a light source of the CCD system to be turned on.

In this way, after inspecting a battery cell in place, the PLC controls the light source of the CCD system to be turned on.

In step S703, a camera of the CCD system takes a photo.

After the light source of the CCD system is turned on, the camera of the CCD system takes a photo of a battery cell to obtain an acquired image.

In step S704, vision software performs algorithm processing.

Here, the CCD system sends the acquired image to an industrial personal computer. Vision software on the industrial personal computer performs algorithm processing and recognition on the acquired image to obtain an inspection result.

Here, the algorithm may be implemented based on a pre-trained model. Sample data is obtained by labeling off-line data. The model is trained based on the sample data to obtain an inspection result. The inspection result is compared with labeled data of the sample data to determine a loss of the model. Parameters of the model are optimized based on the loss until the loss converges, obtaining a trained model. The inspection result is obtained through reasoning performed on the image acquired by the CCD system by the trained model.

In step S705, an inspection result is obtained.

In some embodiments, if inspection is qualified (OK), an inspection station releases a battery cell, which proceeds to a next station. If the inspection is not qualified (NG), the inspection station marks the battery cell as NG.

Here, an industrial personal computer may upload the inspection result to a PLC and an upper computer according to a TCP protocol. The upper computer feeds back the inspection result to a manufacturing execution system (MES).

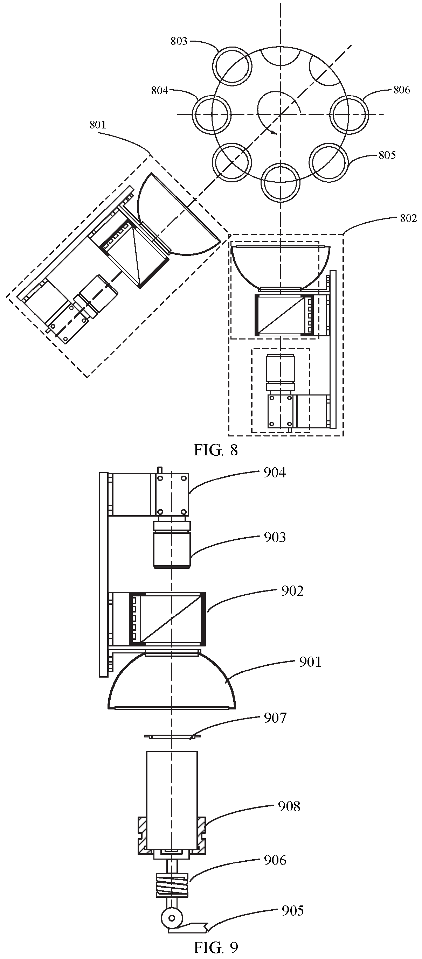

FIG. 8 is a schematic diagram of a layout of an inspection station according to an embodiment of the present disclosure. FIG. 9 is a schematic diagram of an inspection station according to an embodiment of the present disclosure. Based on FIG. 8 and FIG. 9, the embodiments of the present disclosure further provide a type of inspection logic.

As shown in FIG. 8, in support cups on a turntable, two support cups correspond to a first inspection station 801 and a second inspection station 802, two support cups correspond to a first welding station 803 and a second welding station 804, and two support cups correspond to a first discharging station 805 and a second discharging station 806. A battery cell is transferred to different stations through rotation of the turntable.

In the embodiments of the present disclosure, the turntable may be used to convey 2 battery cells from the first welding station 803 and the second welding station 804 to the first inspection station 801 and the second inspection station 802, so as to inspect the 2 battery cells that are fed. As shown in FIG. 9, an inspection system of each group of inspection stations includes a dome light source 901, a coaxial light source 902, a lens 903, a 2D camera 904, and other auxiliary apparatuses (such as an industrial personal computer, a display, a light source controller, an uninterruptible power supply UPS that prevents sudden power off, a communication harness, etc.). The battery cells are conveyed to post-welding inspection stations through the turntable. At each inspection station, one battery cell is inspected. Before the inspection, the battery cell is raised to a limiting reference plate 907 through a turntable cam 905 (namely, a cam) and an elastic raising mechanism 906. Then, a welding area of the battery cell is inspected for a welding seam size and defects through an inspection camera.

In some embodiments, to prevent the light source from causing damage to human eyes and prevent the camera from being contaminated, a protective cover may be provided outside the camera. For compatibility with different lengths of battery cells and facilitating debugging of a camera and a light source, the fixing plates of the camera and the light source are respectively provided with a sliding rail structure and a spiral locking structure to facilitate axial position adjustment of the camera and the light source.

For each battery cell, it is raised through the elastic raising mechanism 906 driven by the turntable cam 905 until the battery cell is closely attached to the limiting reference plate 907. The battery cell does not need to be detached from the support cup 908 (namely, a turntable support cup). The support cup 908 may ensure that each battery cell to be inspected is in place in a consistent state, thereby preventing a problem of inaccurate image position acquisition by a CCD inspection system. After the battery cell is raised and pressed, the CCD inspection system inspects a weld seam and a surface to be tested where the weld seam is located after penetration welding of the battery cell.

In addition, the root of the inner side of the support cup 908 is provided with an avoidance groove, so that a situation is prevented in which a battery cell is contaminated or the battery cell is stuck in the support cup due to accumulation of dust and impurities at the root of the inner side of the support cup after the support cup is used for a long time.

In the embodiments of the present disclosure, a master apparatus PLC communicates with vision software through network. The master apparatus informs a CCD system of two-dimensional code information of a current battery cell and informs CCD of arrival of the battery cell. The PLC provides a light source trigger signal to a camera. The light source is turned on. The camera takes a photo in a 2D mode. After an image is taken for the battery cell, the image is sent to the vision software. A feature of an inspection area may be visually displayed through a processing algorithm. Inspection data may be acquired in real time.

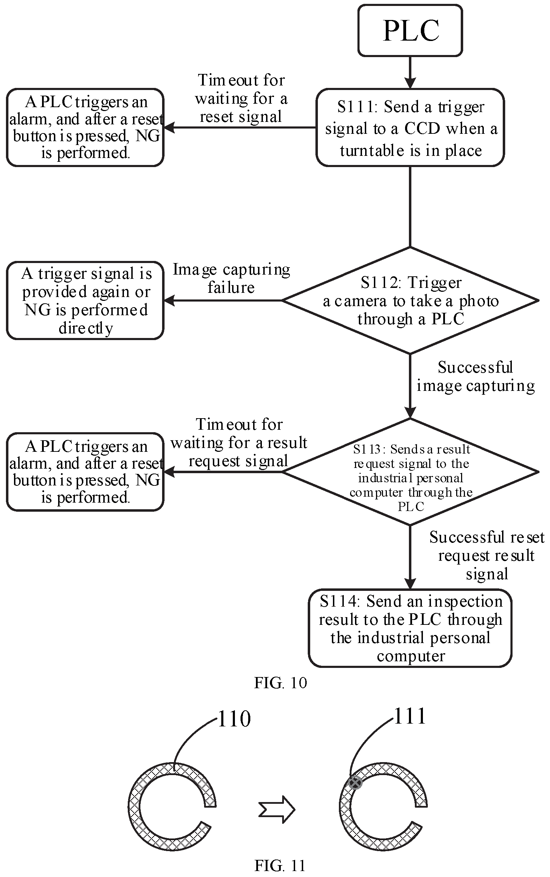

FIG. 10 is a schematic flow chart of inspection communication according to an embodiment of the present disclosure. As shown in FIG. 10, the inspection communication process may be implemented through steps S111 to S114.

In step S111, when a turntable is in place, a trigger signal is sent to a CCD system.

Here, after the turntable is in place, the trigger signal is sent to the CCD system, and the trigger signal is used to trigger photographing.

In step S112, a PLC triggers a camera to take a photo.

Here, if the camera fails to take a photo, the PLC re-sends a trigger signal, or sets a battery cell to be qualified. After the photo is successfully taken, the photo is sent to an industrial personal computer for inspection.

In step S113, the PLC sends a result request signal to the industrial personal computer.

Here, the PLC sends the result request signal to the industrial personal computer, which is suitable for acquiring an inspection result from the industrial personal computer. If a timeout occurs for waiting for the result request signal, the PLC triggers an alarm. After a reset button is pressed, the battery cell is set to be unqualified. If the result request signal is successful, step S114 is performed. Here, if a timeout occurs for the PLC to receive a reset signal, an alarm is triggered. The battery cell is set to be unqualified.

In step S114, the industrial personal computer sends the inspection result to the PLC.

In some embodiments, if the result request signal is successful, the industrial personal computer sends the inspection result to the PLC.

In some embodiments, a plurality of inspection stations are present. Communication logic for each inspection station is the same.

In the embodiments of the present disclosure, a camera is connected with vision software. To improve inspection efficiency and an inspection rate, defect determination is performed through deep learning. A 2D image acquired by a camera is transmitted to the deep learning algorithm, so that the algorithm performs identification and inspection. The algorithm performs defect determination based on located ROI. Finally, a display result is displayed on an interface of the camera.

FIG. 11 is a schematic diagram of a pinhole or a burst point on a welding bead according to an embodiment of the present disclosure. As shown in FIG. 11, 110 is a first welding bead area identified by the vision software, and 111 is a pinhole or a burst point on the welding bead area identified by the vision software.

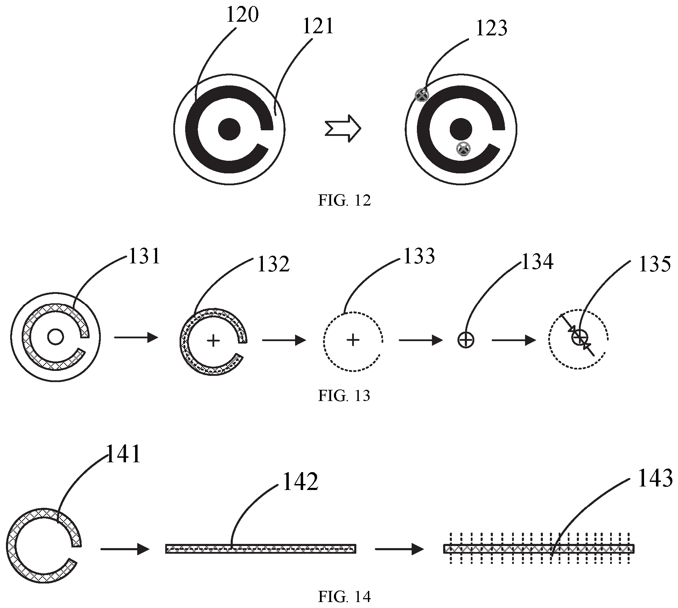

FIG. 12 is a schematic diagram of a welding slag residue according to an embodiment of the present disclosure. As shown in FIG. 12, 120 is a second welding bead area identified by vision software, 121 is a non-welding bead area identified by the vision software, and 122 is a welding slag residue on the non-welding bead area identified by the vision software.

FIG. 13 is a schematic diagram of a welding bead offset according to an embodiment of the present disclosure. As shown in FIG. 13, 131 is a third welding bead area identified by vision software. 132 is a welding bead contour extracted from the welding bead area. 133 is a center coordinate corresponding to a welding bead contour. 134 is an alignment coordinate of a liquid injection hole of a battery cell on the acquired image. 135 is a schematic diagram in which a position alignment is performed for the center coordinate and the alignment coordinate. Whether a welding bead is offset is determined based on an offset between the center coordinate and the alignment coordinate.

FIG. 14 is a schematic diagram of a welding bead size according to an embodiment of the present disclosure. As shown in FIG. 14, 141 may be used for a welding bead contour. 142 is a contour to be measured for forming a straight line. That is, the welding bead contour is expanded to obtain a corresponding straight welding bead, which can be used to calculate or measure the length of the contour. 143 is a schematic diagram of performing uniform pixel segmentation on a contour to be measured. Here, a width value corresponding to each pixel after the uniform pixel segmentation may be calculated and measured.

It should be understood that "one embodiment" or "an embodiment" mentioned in the specification means that specific features, structures, or characteristics related to the embodiment is included in at least one embodiment of the present disclosure. Therefore, "in one embodiment" or "in an embodiment" appearing throughout the specification does not necessarily refer to the same embodiment. In addition, these particular features, structures, or characteristics may be combined in a proper manner in any one or more embodiments. It should be understood that sequence numbers of the foregoing steps/processes do not mean execution sequences in various embodiments of the present disclosure. The execution sequences of the steps/processes should be determined according to functions and internal logic of the processes, and should not constitute any limitation on the implementation processes of the embodiments of the present disclosure. The sequence numbers of the foregoing embodiments of the present disclosure are merely for description purpose but do not imply the preference among the embodiments.

The description of orientation or position relationships indicated by terms such as "up", "down", "top", "bottom", "front", "back", "inside", and "outside" are used in the present disclosure, which is used only for ease of description of the present disclosure, rather than indicating or implying that the mentioned devices must have a particular orientation or must be constructed and operated in a particular orientation. Therefore, such terms should not be construed as limiting of the scope of protection of the present disclosure.

In the description of the present disclosure, it should be noted that, unless otherwise explicitly specified and defined, terms "install", "connect", and "connection" should be understood in a broadest sense, for example, a fixed connection, a detachable connection, or an integral connection. The connection may be a direct connection, or an indirect connection through an intermediary. A person of ordinary skill in the art may understand the specific meanings of the foregoing terms in the present disclosure according to specific situations.

It should be noted that a term "comprise", "include" or any other variant herein are intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of an additional same element in the process, the method, the article, or the apparatus that includes the element.

In the several embodiments provided in the present disclosure, it should be understood that the disclosed system, apparatus, and method may be implemented in other manners. The apparatus embodiments described above are merely exemplary. For example, division of units is merely logical function division and may be other division manners during actual implementation. For example, a plurality of units or assemblies may be combined or integrated into another system, or some features may be omitted or not performed. Furthermore, the mutual coupling or direct coupling or communication connection shown or discussed for constituted parts may be through some interfaces. The indirect coupling or communication connection between apparatuses or units may be in an electrical, mechanical, or other forms.

The units described as separate components may or may not be physically separated, and the components shown as units may or may not be physical units; that is, may be located in one place or may be distributed over a plurality of network units. Some or all of the units may be selected according to actual requirements to achieve the purpose of the solution of this embodiment. In addition, functional units in the embodiments of the present disclosure may be integrated into one processing unit, or units may be physically present separately, or two or more units may be integrated into one unit. The integrated unit may be implemented in a form of hardware, or may be implemented in a form of a hardware and software functional unit.

The above descriptions are merely a specific implementation of the present disclosure, and are not intended to limit the protection scope of the present disclosure. Any variation or replacement readily figured out by a person skilled in the art within the technical scope disclosed in the present disclosure shall fall within the protection scope of the present disclosure.

## Claims

1. A welding inspection method, comprising:
controlling, through a controller, a lifting mechanism on a turntable to perform a lifting operation to lift a battery cell to a preset height, and sending an image acquisition signal to an image acquisition system when the battery cell on the turntable reaches an inspection station;
performing, through the image acquisition system, image acquisition on a welding area of the battery cell located at the preset height in response to the image acquisition signal to obtain an acquired image, and sending the acquired image to an industrial personal computer; and
performing, through the industrial personal computer, welding inspection on the acquired image to obtain a welding inspection result for the battery cell, wherein the welding inspection at least comprises inspection of a welding bead area of the battery cell on the acquired image.

2. The welding inspection method according to claim 1, wherein a plurality of support cups for placing the battery cell are provided on the turntable, and the welding inspection method further comprises:
controlling, through the controller, the turntable to rotate to drive the battery cell to move from the loading station to the inspection station when the battery cell is placed in a support cup at a loading station; and
sending, through the controller, the acquisition signal to the image acquisition system when the battery cell is moved to the inspection station.

3. The welding inspection method according to claim 1 or 2, wherein the performing, through the industrial personal computer, welding inspection on the acquired image to obtain a welding inspection result for the battery cell comprises:
performing, through the industrial personal computer, image segmentation on the acquired image to obtain a welding bead area and a non-welding bead area; and
performing, through the industrial personal computer, at least one type of defect inspection on at least one of the welding bead area and the non-welding bead area through a trained inspection model to obtain at least one defect inspection result, wherein the trained model is obtained based on training via sample images with labeled defects, and the defect inspection result at least comprises a welding slag inspection result, a burst point inspection result, a breakpoint inspection result, a welding bead offset result, and a size inspection result; and
obtaining the welding inspection result for the battery cell based on the at least one defect inspection result.

4. The welding inspection method according to claim 3, wherein the performing, through the industrial personal computer, at least one type of defect inspection on at least one of the welding bead area and the non-welding bead area through a trained inspection model to obtain at least one defect inspection result comprises:
performing, through the industrial personal computer, welding slag inspection on the non-welding bead area through the trained inspection model to obtain a welding slag inspection result;
measuring, through the industrial personal computer, a size of the welding slag to obtain a welding slag size when the welding slag result indicates that the welding slag exists in the non-welding bead area; and
comparing the welding slag size with a preset welding slag size to obtain the welding slag inspection result.

5. The welding inspection method according to claim 3 or 4, wherein the performing, through the industrial personal computer, at least one type of defect inspection on at least one of the welding bead area and the non-welding bead area through a trained inspection model to obtain at least one defect inspection result comprises:
inspecting, through the industrial personal computer, brightness values of all pixels corresponding to the welding bead area through the trained inspection model to obtain a brightness value of each pixel;
determining a quantity of burst-point areas in the welding bead area based on the brightness value of each pixel, wherein a value of a pixel in the burst-point area is greater than a preset value, and a brightness value of a pixel in the burst-point area is greater than preset brightness; and
obtaining the burst point inspection result based on the quantity of the burst-point areas.

6. The welding inspection method according to any one of claims 3 to 5, wherein the performing, through the industrial personal computer, at least one type of defect inspection on at least one of the welding bead area and the non-welding bead area through a trained inspection model to obtain at least one defect inspection result comprises:
performing contour extraction, through the industrial personal computer, on the welding bead area through the trained inspection model to obtain a contour quantity of closed contours corresponding to the welding bead area; and
obtaining the breakpoint inspection result based on the contour quantity.

7. The welding inspection method according to any one of claims 3 to 6, wherein the performing, through the industrial personal computer, at least one type of defect inspection on at least one of the welding bead area and the non-welding bead area through a trained inspection model to obtain at least one defect inspection result comprises:
determining, through the industrial personal computer, a reference point of a battery cell on the acquired image through the trained inspection model and the acquired image;
performing center point fitting on the welding bead area to obtain a welding bead center of the welding bead area, and determining an offset distance between the welding bead center and the reference point; and
comparing the offset distance with a preset offset distance to obtain the welding bead offset result.

8. The welding inspection method according to any one of claims 3 to 7, wherein the performing, through the industrial personal computer, at least one type of defect inspection on at least one of the welding bead area and the non-welding bead area through a trained inspection model to obtain at least one defect inspection result comprises:
performing, through the industrial personal computer, linear fitting on the welding bead area through the trained inspection model to obtain a straight welding bead corresponding to the welding bead area;
performing first measurement on the straight welding bead to obtain a first measured size of the straight welding bead;
performing segmentation processing on the straight welding bead along a length direction of the straight welding bead to obtain a plurality of segmented areas;
performing second measurement on a plurality of non-adjacent target segmented areas in the plurality of segmented areas to obtain a plurality of second measured sizes;
comparing the first measured size with a first preset size interval and comparing the plurality of second measured sizes with a second preset size interval to obtain the size inspection result.

9. The welding inspection method according to any one of claims 4 to 8, wherein the obtaining the welding inspection result for the battery cell based on the at least one defect inspection result comprises:
obtaining a welding inspection result characterizing a normality of the battery cell when none of the welding slag inspection result, the burst point inspection result, the breakpoint inspection result, the welding bead offset result, and the size inspection result is abnormal; and
obtaining a welding inspection result characterizing an abnormality of the battery cell when an inspection abnormality is present, wherein the inspection abnormality comprises at least one of the following: the welding slag inspection result characterizes the welding slag size greater than the preset welding slag size, the burst point inspection result characterizes the quantity of the burst-point areas is greater than a first preset quantity, the breakpoint inspection result characterizes the contour quantity greater than a second preset quantity, the welding bead offset result characterizes the offset distance greater than the preset offset distance, and the size inspection result characterizes the first measured size outside the first preset size interval and the plurality of second measured sizes outside the second preset size interval.

10. The welding inspection method according to any one of claims 1 to 9, further comprising:
sending, through the industrial personal computer, a mark signal to the controller when the welding inspection result characterizes an abnormality of the battery cell; and
controlling, through the controller, a mark mechanism to mark a battery cell having an inspection abnormality based on the mark signal.

11. The welding inspection method according to any one of claims 1 to 10, further comprising:
sending, through the industrial personal computer, an end signal including the welding inspection result to the controller; and
controlling, through the controller, the turntable to rotate based on the end signal to drive the battery cell to move from the inspection station to a discharging station.

12. A welding inspection system, comprising:
a controller, configured to control a lifting mechanism on a turntable to perform a lifting operation to lift a battery cell to a preset height and send an image acquisition signal to an image acquisition system when the battery cell on the turntable reaches an inspection station;
the image acquisition system, configured to perform image acquisition on a welding area of the battery cell located at the preset height in response to the image acquisition signal to obtain an acquired image, and send the acquired image to an industrial personal computer; and
the industrial personal computer, configured to perform welding inspection on the acquired image to obtain a welding inspection result for the battery cell, wherein the welding inspection at least comprises inspection of a welding bead area of the battery cell on the acquired image.

13. The welding inspection system according to claim 12, wherein the lifting mechanism comprises at least a lifting driving member, a cam, a lifting transmission member, an upper top plate, and a limiting plate, wherein:
the controller is further configured to send a lifting signal to the lifting driving member when the battery cell on the turntable reaches the inspection station;
the cam is slidably connected to the turntable and connected to the lifting driving member, and the cam is provided with a slope structure;
the lifting transmission member has an end connected to the upper top plate and the other end located on the slope structure;
the upper top plate is configured to support the battery cell;
the limiting plate is arranged on the turntable and has the preset height; and
the lifting driving member has an end connected to the turntable and another end connected to the cam and is configured to drive the cam to slide on the turntable in response to the lifting signal, so as to drive the lifting transmission member to move in a first direction until the battery cell is in contact with the limiting plate.

14. The welding inspection system according to claim 12 or 13, wherein the turntable further comprises a plurality of turntable support cups, wherein:
a root of an inner side of the turntable support cup is provided with an avoidance groove, and the turntable support cup is configured to place the battery cell.

15. The welding inspection system according to claim 12 or 13, wherein the inspection station comprises at least two image acquisition systems, wherein:
the at least two image acquisition systems are configured to perform image acquisition on the welding area of the battery cell in response to the image acquisition signals to obtain the acquired images.

16. The welding inspection system according to any one of claims 12 to 15, wherein the image acquisition system comprises at least a light source, a camera, a locking structure, and a sliding rail structure, wherein:
the camera is fixed on the inspection station through the locking structure and the sliding rail structure and is configured to perform image acquisition on the welding area of the battery cell to obtain the acquired image;
the light source is fixed on the inspection station through the locking structure and the sliding rail structure and is located between the camera and the turntable to provide a light source for the camera; and
the sliding rail structure is configured to adjust positions of the camera and the light source on the inspection station.
